# EUROPEAN PATENT APPLICATION

(11) **EP 3 902 076 A1**
(43) Date of publication of application: **27.10.2021**
(21) Application number: 21169318.9
(22) Date of filing: 20.04.2021
(51) Int. Cl.: H02G 7/02, H02G 7/04, H02G 7/16, H02G 7/18, H02G 7/05

(54) **PROTECTION SYSTEM FOR OVERHEAD POWER LINES, COMPRISING AN ANTI-PULLING DEVICE**

(30) Priority: 20.04.2020 IT 202000008359
(71) Applicant: Tenesa S.r.l., 14050 Moasca (Asti) (IT)
(72) Inventor: JOVANOV, Daniel, I-14050 MOASCA (Asti) (IT)
(74) Representative: Savoca, Agatino

(57) **Abstract**

A protection system (1) for power lines comprises an anti-pulling device (40), which includes a tubular body (42); a coupling element (48), adapted to connect the anti-pulling device (40) to a support; a connecting tab (50), adapted to connect the anti-pulling device (40) to a flexible cable; a release element (52); a retaining element (54), slidably housed in the tubular body (42) and comprising a hook (54b), movable between a first retaining position, wherein this hook (54b) is in an engaged condition with the connecting tab (50), and a second release position, wherein this hook (54b) is in a disengaged condition from the connecting tab (50); and a first elastic means (56), received in the tubular body (42) and adapted to draw the retaining member (54) toward this first retaining position.

## Description

### Technical field

The present invention is generally in the field of protection systems for power lines; in particular, the invention relates to a structural protection system for power lines, comprising an anti-pulling device.

### Summary of invention

It is known that the electrical cables of an overhead line may bear an excessive weight due, for example, to ice or snow that may deposit on them, or to a sudden load, for example due to a tree falling on the cables, or to the failure of a support pole due to a landslide or an accident (for example, when a car hits the support, pulling down the electric cables connected to it). This may lead to the collapse of the supporting structure.

An object of this invention is to solve the aforementioned problem.

To obtain this result, a protection system for power lines according to the present invention comprises an anti-pulling device, connected to a line support and comprising a retaining element which holds a tab to which an electric cable of the line is connected. The anti-pulling device is configured in such a way that, by increasing the traction on the electric cable beyond a certain threshold (for example, due to a tree falling on the cable, or a failure of the support pole), the tab releases from the retaining element, causing the disconnection of the electric cable and local interruption of the line. This is advantageous since, in this way, the line is not globally compromised, since the interruption is located only in the vicinity of the fault, whereby the integrity of the infrastructure that is slave to the line is preserved, and the damage to one span does not extend to the subsequent spans of the line. Due to the greater safety ensured by such a solution, it is possible to effectively protect the environment surrounding the line, to the benefit of people, property, or animals in the vicinity.

Optionally, the anti-pulling device may be connected to the support by means of an extensible tensioning device which includes a tubular body, connectable at one end to this support (expediently, a plate fixed to an overhead power line support pole), in this tubular body there being a rotatably slidable piston, connectable to a cable of the overhead line.

The telescopic extension of the piston rod with respect to the tubular body allows the cable to flex and twist under the weight of snow or ice, without causing the support to collapse, ideally until the snow falls and the cable is lightened. According to an embodiment, the rotation imparted to the cable may be of the vibrating type, so as to cause the crushing and detachment of the snow or ice that is deposited thereon.

Thus, once the extra weight has been removed, an elastic means causes the rod to return to the cylindrical body, and the cable is brought back to its initial condition.

The present description of the invention will focus on application to a power line, but other contexts are not excluded.

In effect, in general, a protection system comprising an anti-pulling device according to the invention, expediently coupled to an extensible tensioning device of the aforesaid type, lends itself to applications in many fields, and in general (due to the possibility of decoupling provided by the anti-pulling device and to the possible flexibility of the extensible tensioning device) such a system may be employed when it is desired to connect two fixed points, two moving points or a fixed point and a moving point together, with fixed and/or variable tensioning by means of a rope, cord, chain, or other means, so as to protect the connected structures from tearing, pulling and breaking, and to transform the tensioning of the rigid connection into a flexible and separable one when necessary.

An example of a connection between two fixed points is poles and pylons for the distribution of electricity, telecommunications, etc., as described above.

In any case, a protection system according to the invention may be used, for example, also in cable transport systems or another similar connection.

An example of a connection between two moving points occurs when it is necessary to connect two aircraft in flight by means of refueling hoses, or two ships in rough seas that need to transship goods and people, for example in cases of emergency.

An example of one fixed point and another moving point is a boat moored in a harbor with strong winds and high waves, or the sail of a boat tied to the hull, etc.

With a protection device according to the invention, a connection with controlled stiffness is obtained between the parts, reducing or avoiding the risks and damages derived from fixed connections when they are compromised for any reason.

According to an embodiment, the protection system may further include a safety device for interrupting the passage of current in a segment of the power line, comprising at least one electrically conductive body to which the terminals of two electrical conductors are connected, and a breaking element, adapted to engage this electrically conductive body and connected to a pivoting element (expediently, the extensible tensioning device) to which the anti-pulling device is connected, which in turn is hinged to a plate fixed to a support (e.g., a power line pole). In this way, the pivoting of the pivotable element, caused by the lowering of the relevant cable due to a load on said cable, is mechanically transmitted to the electrically conductive body by means of the breaking element.

If the transmitted stress is sufficient (and, therefore, if the pivoting of the pivotable element is sufficiently great due to a load on the cable that exceeds a predetermined safety limit), the electrically conductive body deforms (expediently up to the breakage point, with a brittle- type transition), preventing the passage of current between the two cables connected thereto.

In this way, it is possible to interrupt the electrical continuity of the line locally, especially in the presence of an impulse load on the cable that exceeds a safety value (when a tree falls on the cable, etc.), so as to protect people, animals, or property from risks of electrocution or fire.

The aforesaid and other objects and advantages are achieved, according to an aspect of the invention, by a protection system having the features defined in claim 1. Preferred embodiments of the invention are defined in the dependent claims.

### Brief description of the drawings

The functional and structural features of some preferred embodiments of a protection system for power lines according to the invention will now be described. Reference is made to the appended drawings, wherein:

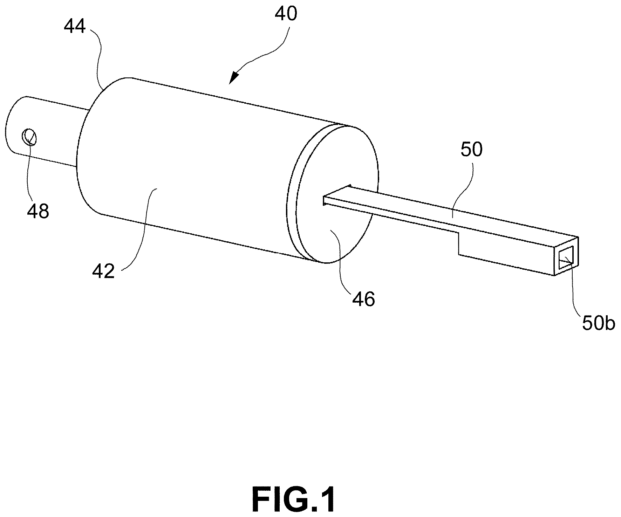

- Fig. 1 is a schematic perspective view of an anti-pulling device included in the protection system, according to an embodiment of the invention;

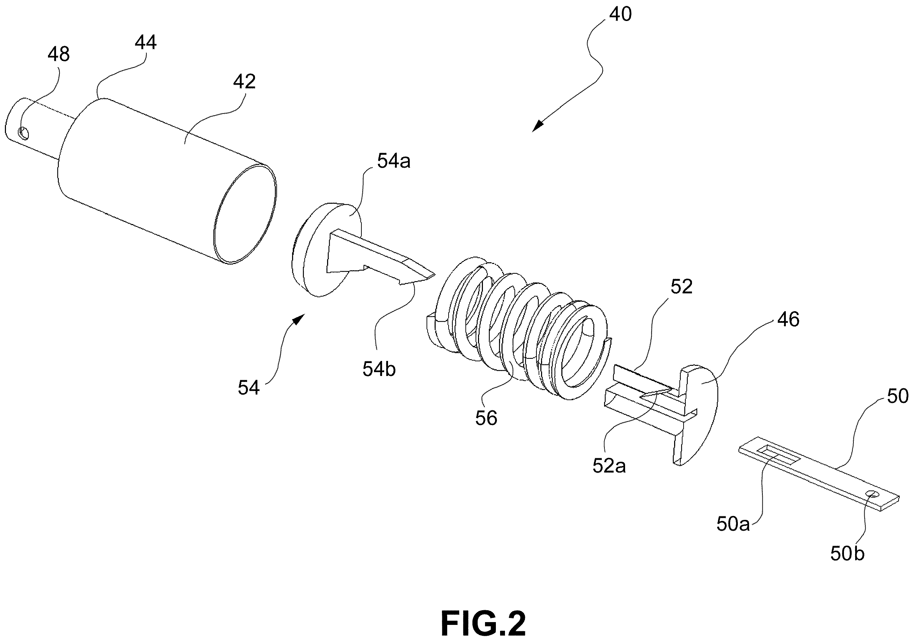

- Fig. 2 is an exploded schematic perspective view of the components of the anti-pulling device of Fig. 1;
- Fig. 3 and 4 are perspective views in longitudinal cross section of the anti-pulling device of Fig. 1, respectively in a rest condition (wherein the retaining element holds the tab) and in a release condition (wherein the tab is released from the retaining element);

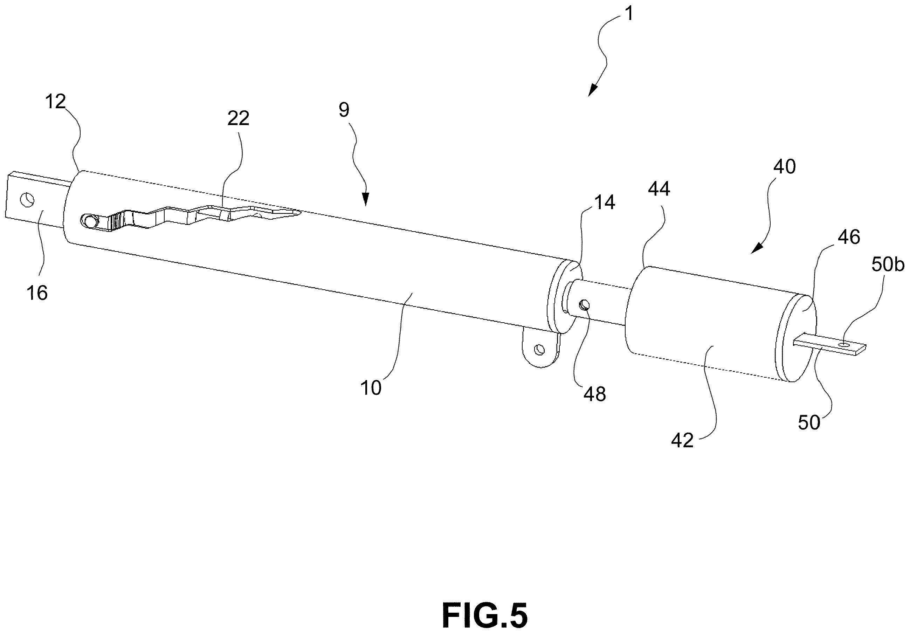

- Fig. 5 is a schematic perspective view of an assembly of an anti-pulling device and an extensible tensioning device, included in the protection system, according to an embodiment of the invention;

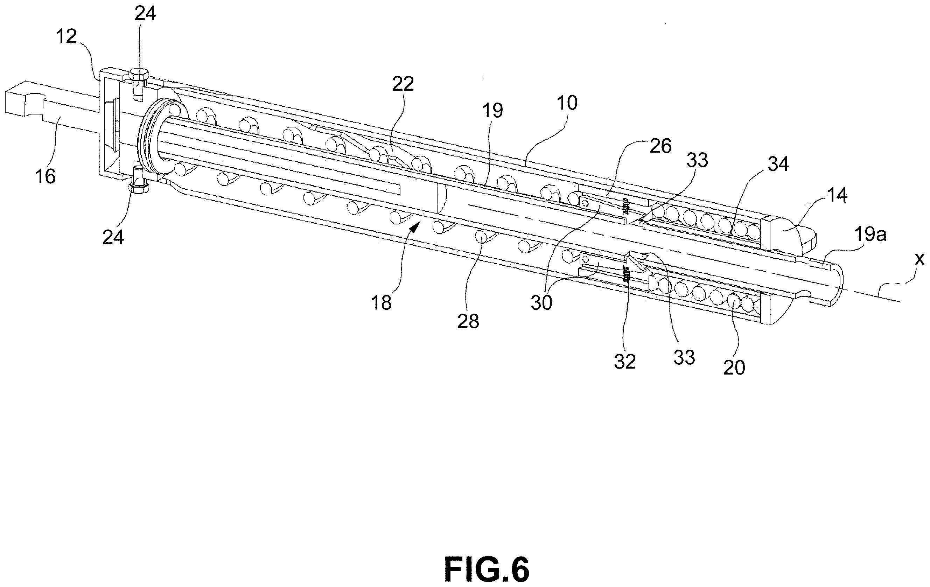

- Fig. 6 is a schematic view in longitudinal cross section of the extensible tensioning device of Fig. 5;

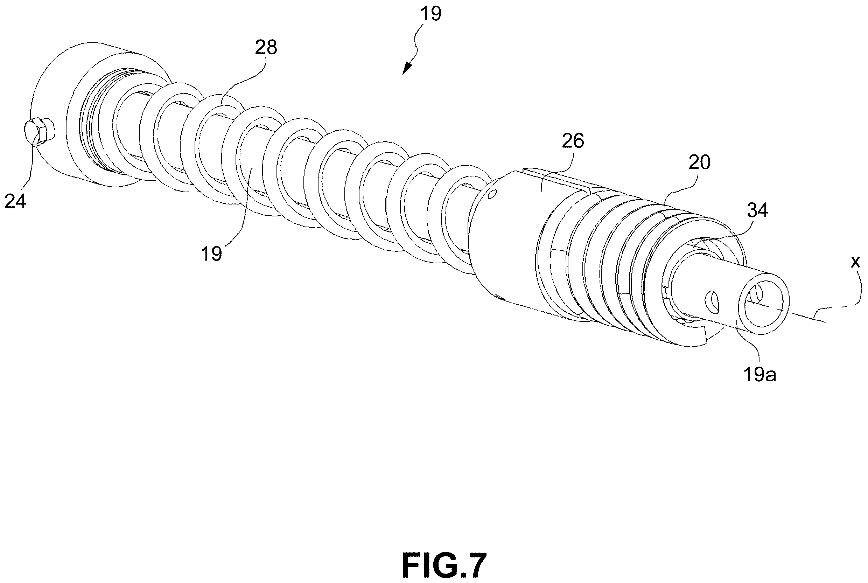

- Fig. 7 is a schematic perspective view of the components inside the tubular casing of the extensible tensioning device of Fig. 6 in assembled configuration;

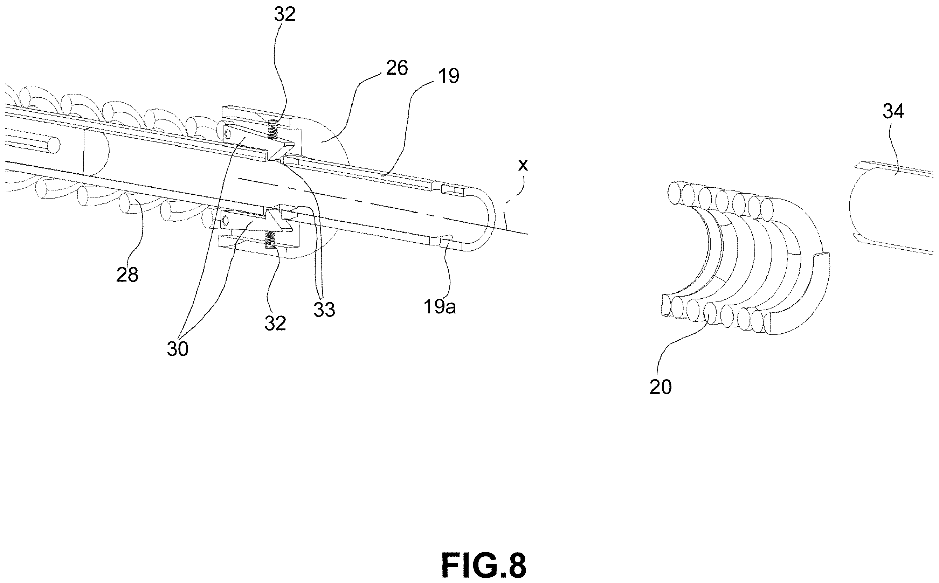

- Fig. 8 is a partially exploded schematic perspective view of the components of the extensible tensioning device of Fig. 7;

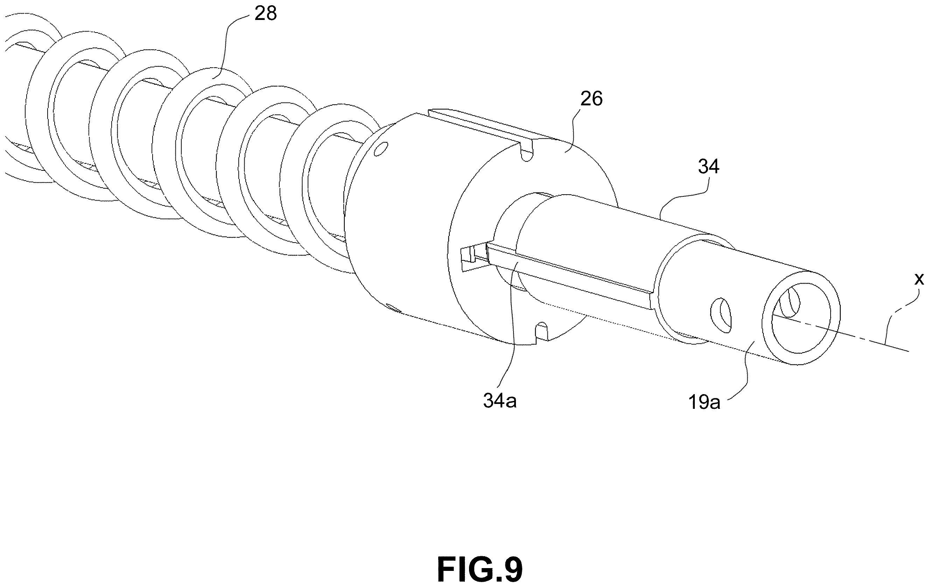

- Fig. 9 is a schematic perspective view of some components of the extensible tensioning device of Fig. 8, in a rest condition;
- Fig. 10 is a schematic perspective view of an assembly of a safety device for interrupting the passage of current in a segment of the power line, connected to an extensible tensioning device and an anti-pulling device, this safety system being optionally included in the protection system, according to an embodiment of the invention;
- Fig. 11 is a schematic perspective view of an assembly of a safety device for interrupting the passage of current in a segment of the power line, connected to an extensible tensioning device and an anti-pulling device, this safety system being optionally included in the protection system, according to a further embodiment of the invention;

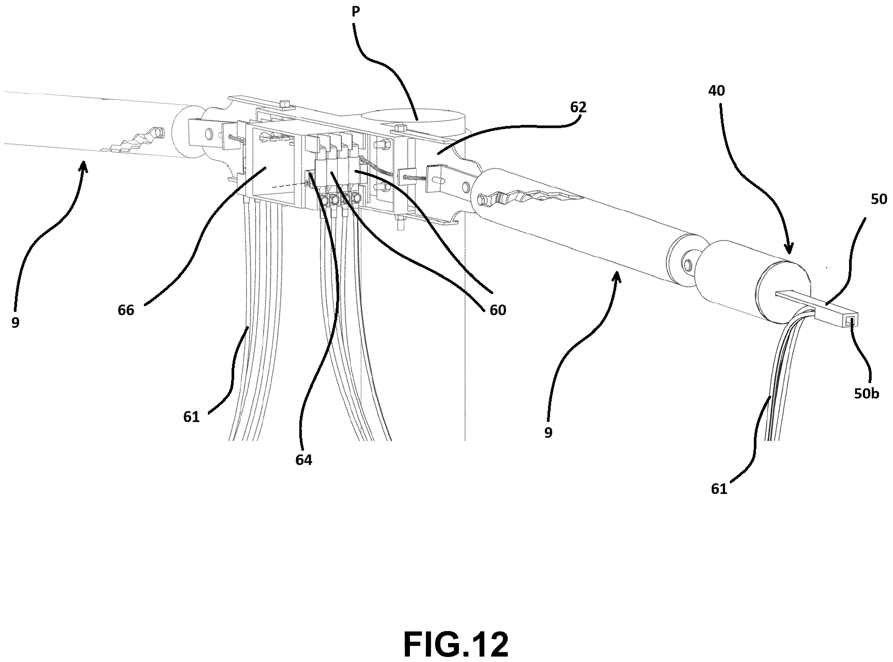

- Fig. 12 is a schematic perspective view of an assembly of a safety device for interrupting the passage of current in a segment of the power line, connected to an extensible tensioning device and to an anti-pulling device, this safety system being optionally included in the protection system, the whole being secured to a support of the power line, according to a further embodiment of the invention;
- Fig. 13 is a perspective view of a detail of Fig. 12; and
- Fig. 14 and 15 are schematic views of the assembly of Fig. 13, wherein some elements have been removed to make the breaking element visible behind the electrically conductive bodies, this breaking element shown respectively in rest and activation conditions.

### Detailed description

Before describing a plurality of embodiments of the invention in detail, it should be clarified that the invention is not limited in its application to the construction details and configuration of the components presented in the following description or illustrated in the drawings. The invention is capable of assuming other embodiments and of being implemented or constructed in practice in different ways. It should also be understood that the phraseology and terminology have a descriptive purpose and should not be construed as limiting.

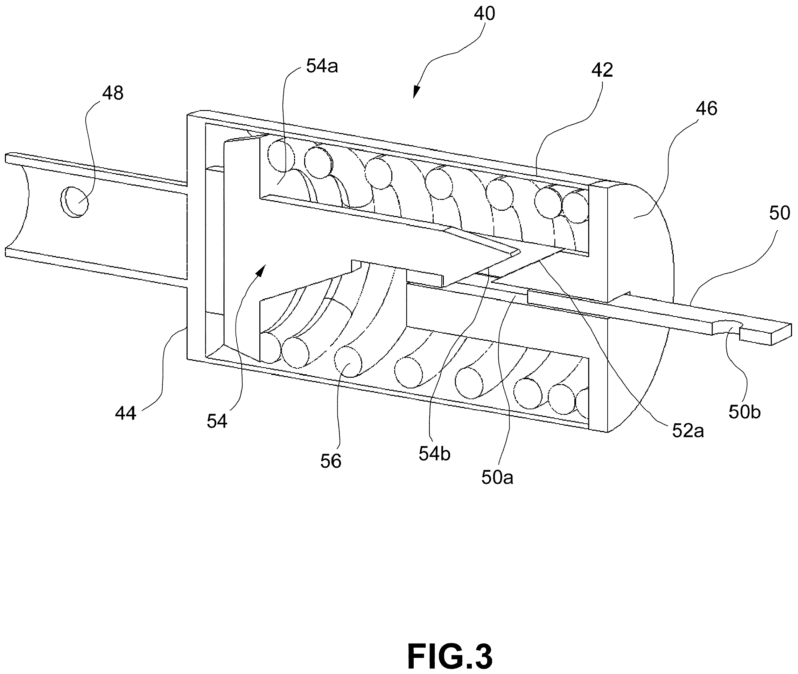

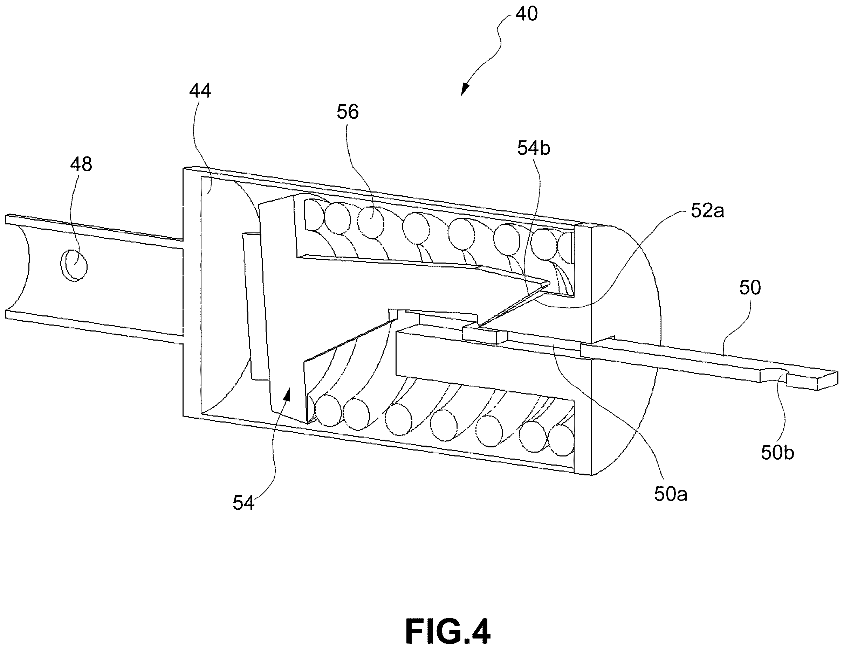

Referring by way of example to the figures, a power line protection system 1 comprises an anti-pulling device 40 including a tubular body 42 extended along a longitudinal direction x and delimited at its ends by a pair of mutually facing end walls 44, 46; a coupling element 48, integral with a first end wall 44 and adapted to connect the anti-pulling device 40 to a support (expediently, an element pivotally connected to a fixed support P, expediently a power line support pole); a connecting tab 50, slidably housed in a through hole in the second end wall 46, said connecting tab 50 having a first and a second seat 50a, 50b respectively on the side of the second end wall 46 facing toward the inside of the tubular body 42 and on the opposite side of the second end wall 46 facing outward, said second seat 50b being adapted to connect the anti-pulling device 40 to the flexible cable; a release element 52, protruding from the second end wall 46 toward the inside of the tubular body 42 in such a way as to at least partially surround the first seat 50a of the connecting tab 50, said release element 52 having at least one ramp portion 52a, the radial thickness of which decreases from the second end wall 46 toward the inside of the tubular body 42; a retaining element 54, slidably housed in the tubular body 42, this retaining element 54 comprising a projection 54a, extended radially, and a hook 54b, projecting axially from the projection 54a and adapted to engage the first seat 50a of the connecting tab 50, said retaining element 54 being movable between a first retaining position, wherein the hook 54b is located in a position distal from the first end wall 44 and in an engaged condition with said first seat 50a of the connecting tab 50 (as shown by way of example in Fig. 3), and a second release position, wherein the hook 54b is in a position proximal to the second end wall 46 and in a disengaged condition from said first seat 50a of the connecting tab 50 (as shown by way of example in Fig. 4). In the released condition, the connecting tab 50 is free to slide out of the tubular body 42, allowing the flexible cable to be detached from the line.

The hook 54b slides along the ramp portion 52a of the release element 52 in the movement between said first retaining position and second release position, in such a way as to lift itself radially and disengage said first seat 50a of the connecting tab 50.

Expediently, there is also a first elastic means 56, housed in the tubular body 42 and adapted to bias the retaining element 54 toward said first retaining position.

With an anti-pulling device of the aforesaid type, as the traction on the flexible cable increases, the connecting tab 50 is pulled towards the outside of the tubular body 42, pulling the retaining element 54 towards the release element 52, which causes the hook 54b to slide along the ramp section 52a, until the hook 54b is released from the first seat 50a of the connecting tab 50, with consequent removal of said tab from the tubular body 42, and detachment of the flexible cable from the fixed support P.

According to an embodiment, the protection system 1 further includes an extensible tensioning device 9 which includes an external cylindrical body 10, extended along a longitudinal direction x and delimited at the ends by a pair of facing secondary end walls 12, 14; a second coupling element 16, integral with a first secondary end wall 12 and adapted to connect the external cylindrical body 10 to the support P (e.g., a power line support pole or pylon); a piston 18, slidably housed inside the external cylindrical body 10 and comprising a rod 19 sliding within a hole passing through a second secondary end wall 14, said piston 18 being rotatably translatable between a first retracted position, wherein the rod 19 is in a maximally retracted configuration inside the external cylindrical body 10 and in a first angular position with respect thereto, and in a second extended position, wherein the rod 19 is in a maximally extended configuration outside the external cylindrical body 10 and in a second angular position rotated with respect to the first angular position, said rod 19 having a connecting end 19a projecting externally from the second secondary end wall 14, this connecting end 19a being connected to the coupling element 48, associated with the anti-pulling device 40; and a second elastic means 20, housed inside the external cylindrical body 10 and adapted to bias the piston 18 toward said first retracted position.

According to an embodiment, the external cylindrical body 10 has at least one seat 22, extended between two ends spaced longitudinally from each other and circumferentially along the external surface of the external cylindrical body 10, said device 9 further comprising a pin 24, projecting transversely from the piston 18 and movable integrally with said piston, this pin 24 being slidably housed in said seat 22 between a first position proximal to a first end of the seat 22, wherein the piston 18 is in its first retracted position, and a second position distal from said first end of the seat 22, wherein the piston 18 is in its second extended position.

Expediently, the seat 22 is a slot passing through the thickness of the external cylindrical body 10 into which the pin 24 is slidably inserted.

According to an embodiment, the seat 22 is shaped in a stepped pattern.

According to an embodiment, the second elastic means 20 engages at one end the second secondary end wall 14, and at the opposite end a projection integral with the rod 19 (expediently, an annular crown of the head of the piston 18, proximal to the first end 12); in this way, the second elastic means 20 opposes the exit of the rod 19 from the external cylindrical body 10, biasing this rod 19 toward the first retracted position.

According to a preferred embodiment, the extensible tensioning device 9 comprises a third elastic means 28 and an annular element 26, axially interposed between the second elastic means 20 and this third elastic means 28.

The annular element 26 is coaxial with respect to the rod 19 of the piston 18 and radially interposed between said rod 19 and the external cylindrical body 10, the rod 19 being slidably housed in said annular element 26, this annular element 26 being engaged on the one side by one end of the second elastic means 20 (the opposite end of said second elastic means 20 abutting against the second secondary end wall 14 of the external cylindrical body 10), and on the other side by one end of the third elastic means 28 (the opposite end of said third elastic means 28 abutting against the projection integral with the rod 19).

The annular element 26 houses at least one hook 30, integral with the annular element 26 and radially movable (against the action of a secondary elastic means 32) between an engaged condition with a corresponding recess 33 on the rod 19, wherein the rod 19 is not free to slide with respect to the annular element 26, and a disengaged condition from the recess 33, wherein the rod 19 is free to slide with respect to the annular element 26.

In this way, in a first step of increasing the load on the flexible cable, the rod 19 tends to extend outside the external cylindrical body 10, translating integrally with the annular element 26 (as long as the engaged condition with the recess 33 by the hook 30 exists), against the force of the elastic means 20, 28 (especially the second elastic means 20), which will tend to push the annular element 26 in the opposite direction.

Since the annular element 26 is located in an intermediate position between the two elastic means 20, 28 and acts as a shoulder for both, the two elastic means 20, 28 will be arranged parallel to each other.

Once a predetermined traction value is exceeded, exerted by the flexible cable on the piston 18, the hook 30 disengages the recess 33, releasing the rod 19 from the annular element 26; in this condition, the annular element 26 will act as a floating shoulder for both elastic means 20, 28. Assuming that the second elastic means 20 has become compacted, the third elastic means 28 will continue to deform (in the illustrated example, compressing against the annular member 26).

Expediently, the second elastic means 20 has a higher stiffness than the stiffness of the third elastic means 28. Preferably, the first elastic means 56 has a higher stiffness than the stiffness of the second and third elastic means 20, 28.

According to an embodiment, the extensible tensioning device 9 comprises a radial shim 34, slidably fitted on the rod 19 in an axially position interposed between the second secondary end wall 14 of the external cylindrical body 10 and the annular element 26, said radial shim 34 presenting radial thickenings 34a adapted to engage the hook 30 to lift said hook radially from the engaged condition of the corresponding recess 33 on the rod 19 to the disengaged condition from the recess 33. These radial thickenings 34a are expediently configured in the manner of ramps of increasing thickness in the direction of the second secondary end wall 14, whereby the hook 30, passing over it, lifts itself to disengage from the recess 33, thus separating the annular element 26 from the rod 19.

In this way, as the traction force exerted by the flexible cable on the rod 19 increases, said rod will translate out of the external cylindrical body 10, pulling the annular element 26, which carries the hook 30. Consequently, the hook 30 will slide on the radial thickenings 34a, from which it will be forced to uncouple from the recess 33. Expediently, the hook 33 will have an attachment portion, facing the radial shim 34, with a shape complementary to the attachment portion of the corresponding radial thickening 34a, so as to facilitate the sliding of the hook 33 on the radial thickening 34a.

According to an embodiment, the protection system 1 further comprises at least one safety device for interrupting the passage of current in a segment of the power line, comprising an electrically conductive body 60, extended between two ends and adapted to electrically connect the terminals of two electric conductors 61, connectable to said ends of said electrically conductive body; a coupling plate 62, which may be secured to the support P, to which a pivoting element is rotatably connected to the coupling plate 62 (expediently, the second coupling element 16 of the external cylindrical body 10 of the extensible tensioning device 9 is hinged to the coupling plate 62); and a breaking element 64, connected to this pivoting element (expediently, the extensible tensioning device 9) and movable from a rest position, wherein the electrically conductive body 60 is in an undeformed condition, and an engaged position, wherein the electrically conductive body 60 is in a deformed condition and prevents the transmission of an electric current between its ends.

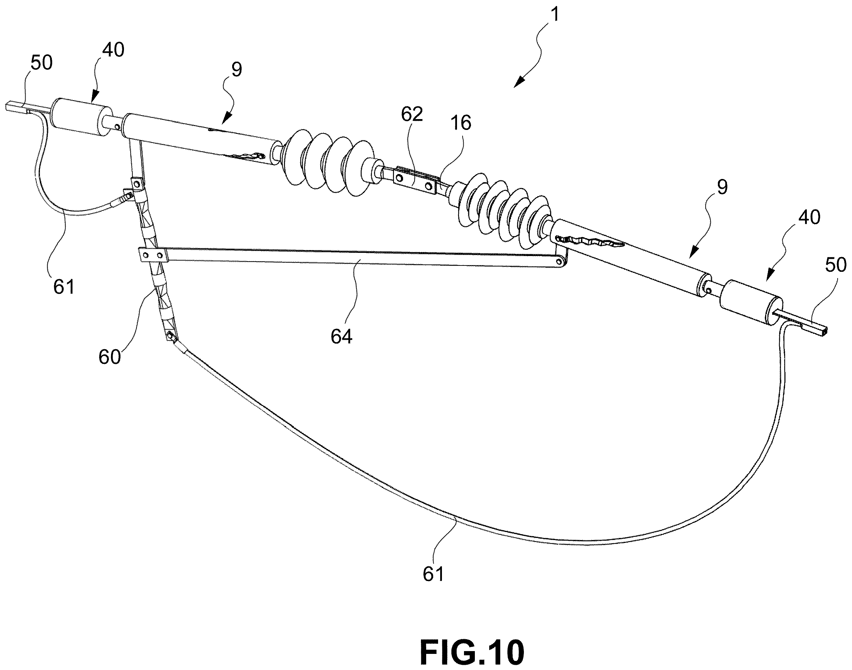

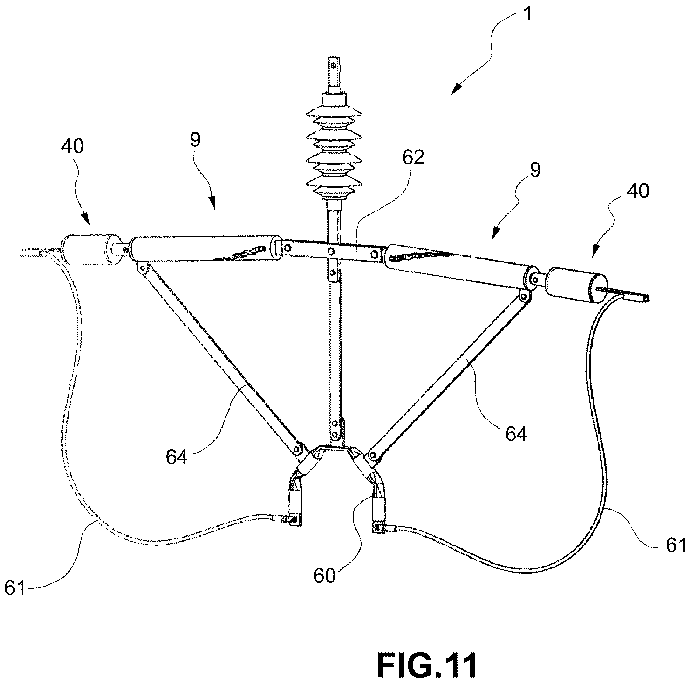

According to an embodiment, the breaking element 64 is a rod hinged at one end to the pivoting element, and at its opposite end to the electrically conductive body 60 (as shown by way of example in Fig. 10 and 11), whereby the pivoting of the pivoting element transmits, through the breaking element 64, a flexing or twisting action to the electrically conductive body 60.

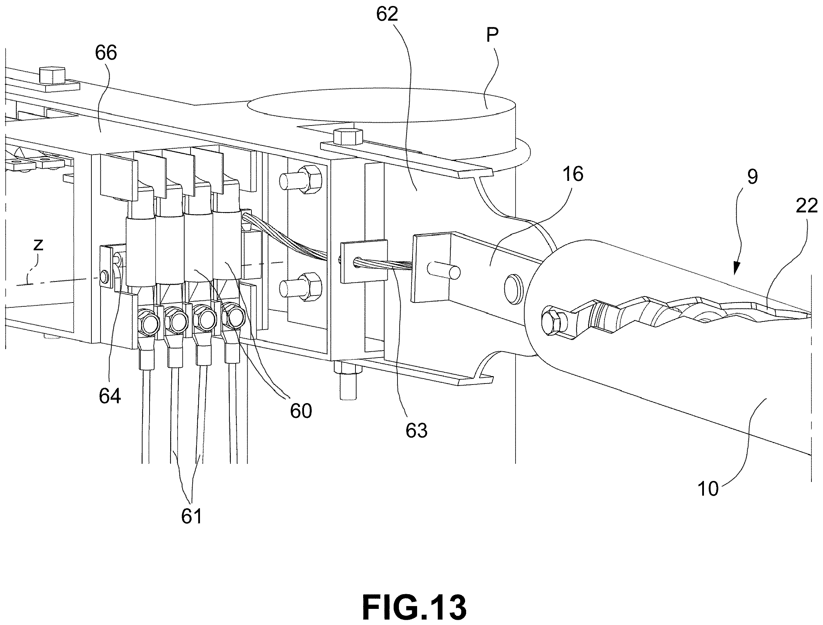

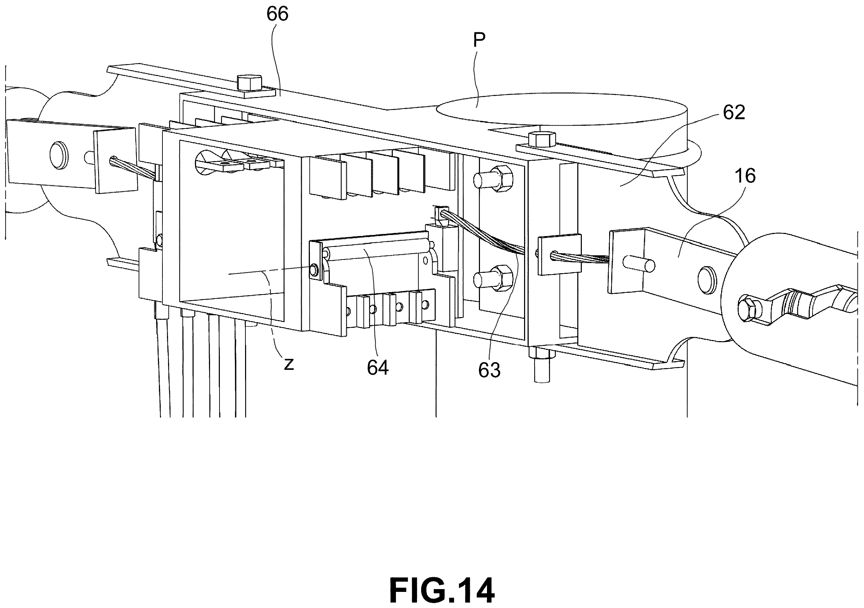

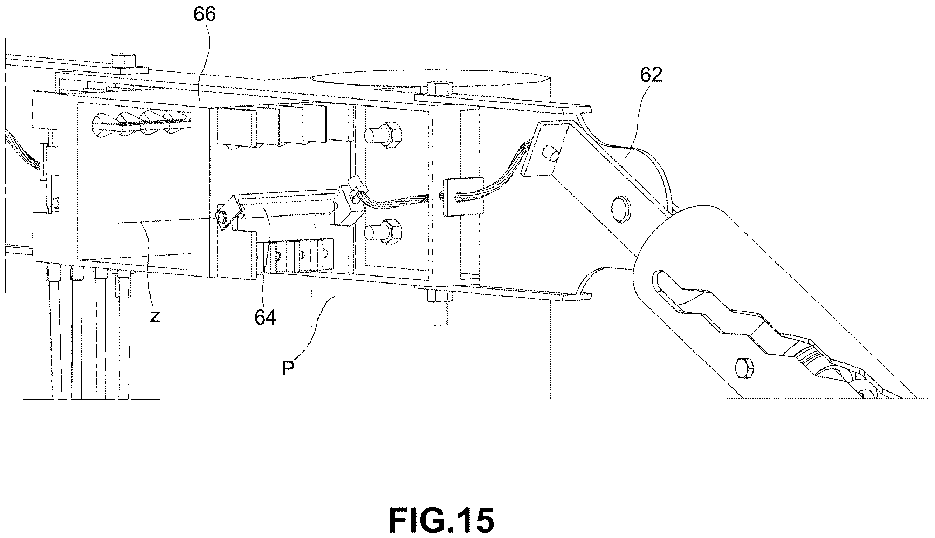

According to an embodiment, the system 1 comprises a junction box 66, integral with the coupling plate 62, at least one electrically conductive body 60 being secured to this junction box 66, and the breaking element 64 in the form of a rod connected to the pivoting element by means of a tie rod 63 being rotatably secured to this junction box 66 (as exemplified in Fig. 13). In this way, the pivoting of the pivoting element causes, through the tie rod 63, a rotation of the breaking element 64 from an inactive position (as shown by way of example in Fig. 14) to an active position (as shown by way of example in Fig. 15), wherein the breaking element 64 imparts a deformation to the electrically conductive body 60.

Expediently, the electrically conductive body 60 is made of a brittle and electrically conductive material, whereby the passage of the breaking element 64 from the rest position to the engaged position causes the breakage of the electrically conductive body and the interruption of the passage of electric current therethrough.

In the example shown, the electric current flows from left to right from the viewpoint of the figures.

According to an embodiment, the at least one electrically conductive body 60 has an L, V, U, or W shape.

Various aspects and embodiments of a protection system according to the invention have been described. It is understood that each embodiment may be combined with any other embodiment. Furthermore, the invention is not limited to the described embodiments, but may be varied within the scope defined by the appended claims.

## Claims

1. A protection system (1) for overhead power lines, comprising an anti-pulling device (40) which includes:
- a tubular body (42) extended along the longitudinal direction (x) and delimited at the ends by a pair of end walls (44, 46), facing each other;
- a coupling element (48), integral with a first end wall (44) and adapted to connect the anti-pulling device (40) to a support;
- a connecting tab (50), slidably received in a hole passing through the second end wall (46), said connecting tab (50) having a first and a second seat (50a, 50b) respectively on the side of the second end wall (46) facing towards the inside of the tubular body (42) and on the opposite side of the second end wall (46) facing outward, said second seat (50b) being adapted to connect the anti-pulling device (40) to a flexible cable;
- a release element (52), protruding from the second end wall (46) toward the inside of the tubular body (42) so as to at least partially surround the first seat (50a) of the connecting tab (50), said release element (52) having at least one ramp section (52a) the radial thickness of which decreases from the second end wall (46) toward the inside of the tubular body (42);
- a retaining element (54), slidably housed in the tubular body (42), this retaining element (54) comprises a projection (54a), extended radially, and a hook (54b), axially protruding from the projection (54a) and adapted to engage the first seat (50a) of the connecting tab (50), said retaining element (54) being movable between a first retaining position, wherein the hook (54b) is in a position distal from the first end wall (44) and in an engaged condition with said first seat (50a) of the connecting tab (50), and a second release position, in which the hook (54b) is in a position proximal to the second end wall (46) and in a disengaged condition from said first seat (50a) of the connecting tab (50), said hook (54b) being slidable along the ramp section (52a) of the release element (52) in the movement between said first retaining position and second release position, in such a way as to radially lift itself and disengage said first seat (50a) of the connecting tab (50); and
- a first elastic means (56), housed in the tubular body (42) and adapted to bias the retaining element (54) towards said first retaining position.

2. The system according to claim 1, further comprising an extensible tensioning device (9) which includes:
- an external cylindrical body (10), extended along a longitudinal direction (x) and delimited at the ends by a pair of secondary end walls (12, 14) facing each other;
- a second coupling element (16), integral with a first secondary end wall (12) and adapted to connect the external cylindrical body (10) to a support (P);
- a piston (18), slidably housed inside the external cylindrical body (10) and comprising a rod (19) slidable within a hole passing through a second secondary end wall (14), said piston (18) being rotatably translatable between a first retracted position, wherein the rod (19) is in a configuration which is maximally retracted inside the external cylindrical body (10) and in a first angular position with respect to the same, and a second extended position, wherein the rod (19) is in a configuration which is maximally extended outside the external cylindrical body (10) and in a second angular position rotated with respect to the first angular position, said rod (19) having a connection end (19a) protruding externally to the second secondary end wall (14), this connection end (19a) being connected to the coupling element (48), associated to the anti-pulling device (40); and
- a second elastic means (20), housed inside the external cylindrical body (10) and adapted to bias the piston (18) toward said first retracted position.

3. The system according to claim 2, wherein the external cylindrical body (10) has at least one seat (22), extended between two ends mutually spaced longitudinally and circumferentially along the external surface of the external cylindrical body (10), said device (9) further comprising a pin (24), protruding transversely from the piston (18) and movable integrally with said piston, this pin (24) being slidably housed in said seat (22) between a first position proximal to a first end of the seat (22), wherein the piston (18) is in its own first retracted position, and a second position distal from said first end of the seat (22), wherein the piston (18) is in its own second extended position.

4. The system according to claim 3, wherein the seat (22) is a slot passing through the thickness of the external cylindrical body (10), in which the pin (24) is inserted slidably.

5. The system according to claim 3 or 4, wherein the seat (22) is shaped in a stepped pattern.

6. The system according to any of the preceding claims, comprising an annular element (26) coaxial with respect to the rod (19) of the piston (18) and radially interposed between said rod (19) and the external cylindrical body (10), the rod (19) being slidably received in said annular element (26), this annular element (26) being engaged on one side by one end of the second elastic means (20), the opposite end of said second elastic means (20) being in abutment against the second secondary end wall (14) of the external cylindrical body (10), and on the other side by one end of a third elastic means (28), the opposite end of said third elastic means (28) being in abutment against a projection integral with the rod (19), said annular element (26) housing at least one hook (30), integral with the annular element (26) and radially movable, against the action of a secondary elastic means (32), between an engaged condition with a corresponding recess (33) on the rod (19), wherein the rod (19) is not free to slide with respect to the annular element (26), and a disengaged condition from the recess (33), wherein the rod (19) is free to slide with respect to the annular element (26).

7. The system according to claim 6, comprising a radial shim (34), slidably fitted on the rod (19) in an axially interposed position between the second secondary end wall (14) of the external cylindrical body (10) and the annular element (26), said radial shim (34) having radial thickenings (34a) suitable for engaging the hook (30) to lift the latter from the engaged condition with the corresponding recess (33) on the rod (19) to the disengaged condition from the recess (33).

8. The system according to any of the preceding claims, further comprising:
- at least one electrically conductive body (60), comprising an electrically conductive body, extended between two ends and adapted to electrically connect the terminals of two electric conductors, connectable to said ends of said electrically conductive body;
- a coupling plate (62), securable to the support (P), a pivotable element, to which the anti-pulling device (40) is connected, being hinged to said coupling plate (62); and
- a breaking element (64), connected to the extensible tensioning device (9) and movable from a rest position, wherein the electrically conductive body (60) is in an undeformed condition, and an engaging position, wherein the electrically conductive body (60) is in a deformed condition and prevents the transmission of electric current between the ends thereof.

9. The system according to claim 8, wherein the breaking element (64) is a rod hinged to said pivotable element hinged at one of the ends thereof to the plate (62), and at the opposite end thereof to the electrically conductive body (60).

10. The system according to claim 8 or 9, wherein said pivotable element is the external cylindrical body (10) of the extendable tensioning device (9), hinged to the coupling plate (62) by means of the second coupling element (16).
